# EUROPEAN PATENT SPECIFICATION

(11) **EP 4 298 178 B1**
(45) Date of publication and mention of the grant of the patent: **09.10.2024**
(21) Application number: 22709297.0
(22) Date of filing: 22.02.2022
(51) Int. Cl.: C09J 189/00, C09J 197/00, C09J 199/00

(54) **ADHESIVE COMPOSITIONS COMPRISING BIO-BASED ADHESIVES FROM RENEWABLE RESOURCES, AND THEIR USE FOR MANUFACTURING PLYWOOD**
KLEBSTOFFZUSAMMENSETZUNGEN MIT BIOBASIERTEN KLEBSTOFFEN AUS ERNEUERBAREN RESSOURCEN UND DEREN VERWENDUNG ZUR HERSTELLUNG VON SPERRHOLZ
COMPOSITIONS ADHÉSIVES COMPRENANT DES ADHÉSIFS BIOLOGIQUES À PARTIR DE RESSOURCES RENOUVELABLES ET LEUR UTILISATION POUR LA FABRICATION DE CONTREPLAQUÉ

(30) Priority: 23.02.2021 EP 21382147
(43) Date of publication of application: 03.01.2024
(73) Proprietor: FORESA TECHNOLOGIES, S.L.U., 36650 Caldas de Reis Pontevedra (ES)
(72) Inventor: FERNÁNDEZ FONDEVILA, Luciano, 36650 Caldas de Reis (ES); LÓPEZ-SUEVOS FRAGUELA, Francisco, 36650 Caldas de Reis (ES); VIZ RODRÍGUEZ, Felipe, 36650 Caldas de Reis (ES)
(74) Representative: Balder IP Law, S.L.
(86) International application number: PCT/EP2022/054451
(87) International publication number: WO 2022/180060

(56) References cited:
- JP-A- 2009 073 895
- US-A1- 2013 240 114
- US-A1- 2016 096 985
- US-A1- 2019 210 323
- US-B2- 10 696 882

## Description

### FIELD OF THE INVENTION

The present invention describes novel formaldehyde-free adhesive compositions comprising at least one bio-based adhesive from a renewable resource, adhesive systems comprising, isolated one of another, the adhesive composition (component A) and at least one hardener agent (component B), and adhesive mixtures comprising the adhesive composition and the hardener agent. Adhesive compositions, systems and mixtures described in this document can be used for plywood manufacturing.

### BACKGROUND OF THE INVENTION

Currently, the great majority of industrial wood products are reconstituted materials that are held together by synthetic thermosetting adhesives. The resins used to bind them are in general formaldehyde-based adhesives. However, environmental and health considerations have prompted the introduction of more severe standards regarding the emission of formaldehyde from bonded wood products and, therefore, the development and use of adhesives from renewable resources for the production of environmentally friendly adhesives is receiving an increasing attention nowadays.

Thus, carbohydrates from different natural resources have been used as wood adhesive in the form of polysaccharides, gums, oligomers and monomeric sugars. These carbohydrates may be used directly as wood adhesive or, alternatively, may be transformed into furanic resins by acid degradation. Carbohydrate adhesives may be obtained from different renewable resources. In particular, waste vegetable materials may be used to obtain furanic resins [A. Pizzi, J. Adhesion Sci. Technol, Vol. 20, No 8, pp 829-846 (2006*)*]; whereas crab and shrimp shells may be used as a natural resource of chitin, which may be derived to chitosan from deacetylation. Chitosan is a copolymer of β-(1,4)-linked 2-acetamido-2-deoxy-D-glucopyranoses and 2-amino-2-deoxy-D-glucopyranoses which has been also described as bio-adhesive in wood manufacturing [Ji Xiaodi et al, Royal Society Open Science, 5(4), 172002/1-172002/11 (2018*)]*.

Plant protein is another natural resource to produce environmentally friendly adhesives for wood manufacturing. Several studies have been conducted providing protein-based adhesives derived from different crops such as soy, canola, cottonseed, wheat gluten, zein and peas. In particular, acceptable results have been reported by using soy proteins-based adhesives added to traditional synthetic wood adhesive or after partial hydrolysis and modifications of the soy protein [Fatemeh Ferdosian, et al.; Polymers, 9, 70 (2017*);* A. Pizzi, J. Adhesion Sci. Technol, Vol. 20, No 8, pp 829-846 (2006*)*]. Compounds of phenolic nature such as, for example, condensed tannins or lignin may also be used as bio-adhesive in wood manufacturing. These polyphenolic based adhesives may be obtained from renewable feedstock, in particular, from vegetable biomass. Thus, condensed tannins and their flavonoid precursors are known for their wide distribution in nature and particularly for their substantial concentration in the wood and bark of various trees. These include various Acacia (wattle or mimosa), Schinopsis (quebracho), Tsuga (hemlock), Rhus (sumach), Pinus (pine), Carva illinoinensis (pecan) and Pseudotsuga mesiesii (Douglas fir) species. Lignin adhesives have probably been the most intensely researched one as regards wood adhesives applications, since this phenolic material is abundant in nature and of low cost [Fatemeh Ferdosian, et al.; Polymers, 9, 70 (2017*);* A. Pizzi, J. Adhesion Sci. Technol, Vol. 20, No 8, pp 829-846 (2006*)*].

Unsaturated vegetable oils such as linseed oil have also been used in producing wood adhesives by epoxidation of the oil double bonds followed by cross-linking with a cyclic polycarboxylic acid anhydride to build up molecular weight. Due to its dual nature, phenolic nuclei plus unsaturated fatty acid chain, cardanol, which may be found in cashew nut shell liquid, is also a potential natural raw material for the synthesis of waterresistant resins and polymers for wood manufacturing [A. Pizzi, J. Adhesion Sci. Technol, Vol. 20, No 8, pp 829-846 (2006*)*]*.*

JP2009/073895, US2019/210323, and US10696882 disclose polyflavonoid, flour, and thickener agent-based adhesives.

Plywood is a manufactured board that it is made from thin layers of solid timber veneer (typically, 0.1 - 3 mm thickness) that are glued together having their wood grain rotated up to 90° to one another and compressed under heat. Because it is made in layers it is incredibly strong but also light in weight. There are two types of plywood: softwood plywood and hardwood plywood. Softwoods generally correspond to coniferous species. The most commonly used softwoods for manufacturing plywood are firs and pines. Hardwoods generally correspond to deciduous species. For hardwood plywood, commonly used wood species include oak, poplar, maple, cherry, and larch.

The glue mix required in plywood manufacture is usually prepared on site, due to the lack of compatibility between the components of this glue mix over time (i.e., resin, catalyst/hardener, organic and inorganic fillers, water and other additives). For this reason, conventional manufacturing of plywood requires an important infrastructure to store and manipulate the glue mix raw materials, as well as specific blending facilities and manpower for preparing the glue mix on site.

### DESCRIPTION OF THE INVENTION

The present invention refers to adhesive compositions for plywood manufacturing including all the required ingredients but the hardener agent. Surprisingly, it has been found that the specific selection of ingredients carried out by the inventors resulted in adhesive compositions which are completely stable over time and, therefore, the use of the adhesive compositions and systems of the invention in plywood manufacturing can minimize the need of large on site infrastructures and lack of reproducibility of the glue mix preparation.

In particular, the present invention refers to an adhesive composition comprising flour, a thickener agent and, preferably, an inorganic filler. The combination of these additives with at least one bio-based adhesive as described herein and, optionally, a viscosity reducing agent results in the homogenous adhesive composition of the invention, which surprisingly remains stable over time. More specifically, the shelf life of the adhesive composition of the invention is of at least 2 weeks.

These adhesive compositions provide several important advantages in plywood manufacturing. First of all, the reproducibility of the manufacturing process and, consequently, of the adhesive composition itself is significantly increased, because the stability of the composition enables it to be manufactured in separate facilities, which are usually more suitable for this activity than plywood manufacturing facilities. Besides that, the adhesive composition of the invention enables a simplification of the facility required for plywood manufacturing, since the equipment conventionally used for storing and handling starting materials such as adhesive, inorganic and organic fillers and other additives are no longer needed; and an important saving of time, manpower and equipment occupation commonly used for preparing the glue mixture on site is also achieved. Thus, the current invention provides an adhesive composition (component A) which only needs to be mixed with a hardening agent before being applied on the veneer.

In a first aspect, the present invention is related to an adhesive composition comprising at least one bio-based adhesive, flour, at least one thickener agent and water, optionally the composition further comprises at least one inorganic filler, at least one viscosity reducing agent or a combination thereof.

Adhesive compositions described in this document provides an important advantage over prior adhesive composition, because all ingredients required, but the hardener agent, can be included in the same formulation, which remains stable over time. More specifically, the shelf life of the adhesive composition of the invention is at least 2 weeks.

"Shelf life" in the frame of the present invention is meant to be the period of time during which the adhesive composition can be stored and remain suitable for use. Preferably, this term refers to the period of time during which no sedimentation is visually observed in the adhesive composition being stored at a temperature from 15°C to 30°C, preferably from 20°C to 25°C. In order to establish the shelf life of an adhesive composition according to the invention, a sample stored into a transparent glass container at a temperature from 15°C to 30°C, preferably from 20°C to 25°C, for a determined period of time is visually observed. More specifically, the bottom of the transparent glass container can be rubbed with a glass bar. When sedimentation occurs, a certain amount of solid material can be observed at the tip of the bar.

In the frame of this invention, the terms "bio-based adhesive" or "bio-adhesive" are used interchangeably and both refer to a substance that, interposed between two different materials, is capable of holding those materials together and, additionally, this adhesive substance or active ingredient can be obtained from renewable resources. In particular, the "bio-based adhesive" or "bio-adhesive" according to the invention is a substance such as a resin, in particular a formaldehyde-free resin, capable of hardening by autocondensation and/or by using a hardener or catalyst. These bio-adhesive substances or active ingredients may be obtained from renewable feedstock widely distributed in nature, vegetable biomass primarily, although other suitable resources such as, for example, crustaceous shells are also possible.

The at least one bio-based adhesive comprised in the adhesive composition of the invention is preferably selected from soy protein, chitosan, furanic resin, unsaturated oil resin, polyphenolic based polymers and a combination thereof. The polyphenolic based polymers may be, for example, lignin or polyflavonoids (i.e., polymers which main polyphenolic patterns are formed by flavonoid monomers) or a combination thereof.

In particular, polyphenolic based polymers according to the invention are free from formaldehyde or monomers derived from formaldehyde and, therefore, they are free from phenol formaldehyde resins. Thus, the polyphenolic based polymers preferably are lignin or polyflavonoids (i.e., polymers which main polyphenolic patterns are formed by flavonoid monomers) or a combination thereof, provided that they are free from phenol formaldehyde resins.

In those embodiments of the invention wherein the bio-adhesive may be obtained from vegetable biomass, the bio-adhesive substances present in the adhesive composition may be comprised in a vegetable extract.

The adhesive composition described herein comprises
- 100 parts by weight of solid content of at least one vegetable extract comprising at least one bio-based adhesive, preferably polyphenolic polymers, and more preferably polyflavonoids;
- 5 to 40 parts by weight of flour;
- 0 to 20 parts by weight of at least one inorganic filler;
- 0.02 to 0.2 parts by weight of at least one thickener agent;
- 0 to 15 parts by weight of at least one viscosity reducing agent preferably selected from glycol, triacetin and a combination thereof; and
- 67 to 155 parts by weight of water,
wherein the Stiasny number of the vegetable extract comprising polyflavonoids is higher than 65%.

The vegetable extracts comprising at least one bio-adhesive substance used to obtain the adhesive composition of the invention may present different forms, for example, they may be a solid, a solution or a suspension. Thus, the expression "solid content of at least one vegetable extract comprising the bio-based adhesive" is defined as the amount of non-volatile matter contained in the vegetable extract. This solid content may be determined by methods known in the art, e.g. by drying a known weight amount of the vegetable extract comprising the bio-adhesive until a constant weight is obtained, so that the solid content percentage in the vegetable extract is the proportion of dry weight with respect to the weight of the vegetable extract prior to drying. Drying may be performed in an oven at a temperature of, e.g., 105 °C.

According to the invention described herein, the adhesive composition preferably comprises a vegetable extract comprising polyphenolic polymers such as polyphenolic resins as bio-adhesive substance, more preferably a vegetable extract comprising polymers with a polyphenolic pattern mainly formed by flavonoids units with different condensation degree (flavan-3-ol and flavan-2,4-diol) as well as other flavonoids analogs. [Roux DG, Ferreira D, Botha JJ. Forest. Products. Journal 26, 27 (1980*);* Roux DG, Ferreira D, Botha JJ. Journal of Agricultural and Food Chemistry 28, 216 (1980*);* Roux DG, Ferreira D, Hundt HKL, Malan E. Applied Polymer Symposium 28, 335 (1975*)*]. These bio-adhesive substances are known in the art as condensed tannins, as well as polyflavonoids or proanthocyanins polymers.

The vegetable extract comprising polyflavonoids as bio-based adhesives is preferably selected from mimosa bark extract, quebracho wood extract, hemlock bark extract, sumach bark extract, pine bark extract, pecan nut pith extract, Douglas fir bark extract and a combination thereof. More preferably, the vegetable extract comprised in the adhesive composition of the invention is selected from pecan nut pith extract, mimosa bark extract, quebracho wood extract, pine bark extract and a mixture thereof.

Pecan nut pith extracts are more reactive than other vegetable extracts such as mimosa bark or pine bark extracts due to its high content of flavonoids units comprising both phloroglucinol A rings and pyrogallol B rings. For this reason, despite its limited availability in particular in Spain, adhesive compositions according to some embodiments of this invention comprise at least one pecan nut pith extract.

According to other embodiments of the invention, however, the adhesive composition preferably comprises mimosa or pine extracts, because they provide a suitable adhesive reactivity and, additionally, they can be available in sufficient quantity for industrial manufacturing of plywood boards at a reasonable price.

Adhesive compositions according to particular embodiments of the invention comprise at least one vegetable extract comprising polyflavonoids preferably having a Stiasny number higher than 65%, more preferably equal to or higher than 75%.

The Stiasny number method is used to determine the polyphenol content of the extracts according to the procedure proposed by Yazaki and Hillis (see Yazaki, Y., Hillis, W.E., 1980. Molecular size distribution of radiata pine bark extracts and its effects on properties. Holzforschung 34, 125-130). According to this method, an exact amount of the dried extract (approx. 0.250 g) is dissolved in distilled water (25ml), then 2.5ml of 10M HCL and 3.2ml of 55 wt.% formaldehyde water solution are added. The mixture is heated under reflux for 30min. After that, the suspension is filtered under vacuum using a 0.1 µm type VVLP filter (Durapore Membrane filters), the precipitate is washed with warm water, and then dried at 105°C until constant weight. The Stiasny number is the ratio of the oven-dried weight of the precipitate to the initial dried extract weight, expressed as a percentage.

In some embodiments of the invention, at least one of the vegetable extracts comprised in the adhesive composition is a mimosa bark extract or a quebracho wood extract, preferably having Stiasny number higher than 65%, and more preferably equal to or higher than 75%, and more preferably a viscosity which ranges from 100 cP to 1000 cP (measured in a 50% w/w water solution at 25°C and shear rate of 100 s-1 in a Peltier-plate Rheometer), a pH (50% w/w water solution at 25°C) from 4 to 8 and/or a reactivity/gel time (50% w/w water solution with 6.5% w/w Hexamine Powder at 100°C) from 100 to 200 s.

In some embodiments of the invention, at least one of the vegetable extracts comprised in the adhesive composition is a pine bark extract, preferably having Stiasny number equal to or higher than 75%, and more preferably equal to or higher than 80%. Besides that, this pine bark extract has a viscosity which preferably ranges from 100 cP to 1000 cP (measured in a 36% w/w water solution at 25°C and shear rate of 100 s-1 in a Peltier-plate Rheometer), a pH (36% w/w water solution at 25°C) from 4 to 8 and/or a reactivity/gel time (36% w/w water solution with 6.5% w/w Hexamine Powder at 100°C) from 50 to 110 s, and/or a reactivity/gel time (36% w/w water solution with pH 7 with 12 % w/w tris(hydroxymethyl)nitromethane powder) from 50 to 70 s.

In some embodiments of the invention, at least one of the vegetable extracts comprised in the adhesive composition is a pecan nut pith extract, preferably having Stiasny number equal to or higher than 75%, and more preferably equal to or higher than 80%. Besides that, this pecan nut pith bark extract has a viscosity which preferably ranges from 100 cP to 1000 cP (measured in a 40% w/w water solution at 25°C and shear rate of 100 s-1 in a Peltier-plate Rheometer), a pH (40% w/w water solution at 25°C) from 4 to 8 and/or a reactivity/gel time (40% w/w water solution, pH from 4 to 8, with 6.5% w/w Hexamine Powder at 100°C) from 35 to 70 s.

Adhesive compositions according to the invention may comprise a combination of different polyflavonoid vegetable extracts. In particular, they may comprise one or more of the mimosa bark extract, quebracho wood extract, pine bark extract and pecan nut pith extract described in this document.

According to the invention, the solid content of the at least one polyflavonoid vegetable extract comprised in the adhesive composition may range from 39 wt.% to 60 wt.%, percentage expressed by weight in respect of the sum of vegetable extract and water, depending on the type of extract used. This range corresponds to the vegetable extract concentration on an aqueous solution comprising 100 parts by weight of solid content of the vegetable extract and from 155 to 67 parts by weight of water.

The adhesive composition of the invention also comprises at least one thickener agent. In particular, the thickener agent may be selected from cellulose nanofibrils, carboxymethyl cellulose, hydroxyethyl cellulose, xanthan gum, sepiolite and a combination thereof.

The inventors surprisingly found that a small amount (from 0.02 to 0.2 parts by weight in respect of 100 parts by weight of solid content of the vegetable extract comprising at least one bio-based adhesive such as polyphenolic polymers and, in particular, polyflavonoids) of at least one thickener agent, in particular one or more of those thickener agents herein specified, may create a network in the adhesive composition of the invention preventing sedimentation, thus providing a composition stable over time, in particular, the shelf life of these adhesive compositions is at least 2 weeks. This represent a huge advantage regarding adhesive composition typically used in plywood manufacture, which must be prepared on site because their shelf life is not higher than 24 h, usually not higher than 4 hours. Another advantage that these thickener agents provides to the adhesive composition of the invention is that, different to other adhesive compositions for plywood manufacturing, bad odors due to decomposition are not observed in samples stored. This fact represents an important advantage in order to use adhesive composition of the invention for manufacturing plywood boards.

Thickener agents used to prepare the adhesive composition described in this document may be solid, or an aqueous solution or dispersion, preferably with solid content equal to or lower than 3 wt.%.

Xanthan gum is a biopolymer with a polysaccharide nature corresponding to CAS No. 11138-66-2. In those particular embodiments of the invention wherein xanthan gum is used as thickener agent, an aqueous solution with a solid content equal to or lower than 1 wt.% may be used to prepare the adhesive composition of the invention.

Sepiolite is a naturally occurring clay mineral of sedimentary. Due to its inorganic nature, this thickener agent may also improve the water resistance of plywood boards. In those particular embodiments of the invention wherein sepiolite is used as thickener agent, an aqueous dispersion may be used to prepare the adhesive composition.

An amount of thickener agent lower than 0.02 parts by weight in respect to 100 parts by weight of solid content of vegetable extract as defined in this document may not be enough for preventing sedimentation, whereas an amount of thickener agent higher than 0.2 parts by weight in respect to 100 parts by weight of solid content of vegetable extract may negatively affect the rheological properties of the adhesive composition and, additionally, the water resistance of plywood board obtained using such adhesive composition.

In preferred embodiments of the invention, the adhesive composition comprises a vegetable extract comprising polyflavonoid polymers and from 0.02 to 0.2 parts by weight, more preferably from 0.03 to 0.1 parts by weight, even more preferably from 0.026 to 0.050 parts by weight, of solid content of thickener agent in respect to 100 parts by weight of solid content of vegetable extract. Preferably, the thickener agent is selected from cellulose nanofibrils, carboxymethyl cellulose, hydroxyethyl cellulose, xanthan gum, sepiolite and a combination thereof.

The adhesive composition according to the invention may comprise from 5 parts to 40 parts by weight of flour with respect to 100 parts by weight of solid content of the vegetable extract comprising at least one bio-based adhesive, preferably polyphenolic polymers, and more preferably polyflavonoids. This particular organic filler, which can be considered as a pseudoplastic fluid, is able to provide a more homogeneous distribution of the adhesive mixture on the veneers and, as a result, the bond quality of the plywood can be improved. Besides that, the presence of flour in the adhesive composition of the invention may help to retain water when the adhesive mixture is applied to the veneers, so reducing the dry rate.

In some embodiments of the invention, flour comprised in the adhesive composition described in this document has a harmonic mean particle size value lower than 150 µm, preferably lower than 50 µm, more preferably lower than 20 µm, wherein such harmonic mean value is measured using a Laser Particle Sizer Analysette 22 Microtec.

The smaller the particle size distribution of flour comprised in the adhesive composition of the invention, the more effective the stabilization of the adhesive mixture with the thickener agent and, therefore, lower amount of filler is required.

Flour present in the adhesive composition according to the invention may be selected from wheat flour, olive pit flour, almond shell flour, corn flour, coconut husk flour, soy flour, rye flour, hemp flour, pumpkin flour, rice flour, coconut flour, wood flour and any combination thereof.

Wheat flour is preferred because this particular flour can provide the above-mentioned properties to the adhesive composition and mixture according to the invention and, additionally, it is widely available and less expensive than other flours. Some authors found that hemp flour may help reducing free formaldehyde (Kawalerczyk et al. (2019). "Flour fillers in plywood", BioResources 14(3), 6727-6735) and, therefore, the presence of this flour in the bio-based adhesive composition according to the invention may be particularly advantageous for manufacturing plywood boards complying with the requirements of free formaldehyde emission. However, other flours among the above-mentioned are also preferred because they may provide good results in the plywood manufacturing.

The harmonic mean particle size value of some of the listed flours (measured using a Laser Particle Sizer Analysette 22 Microtec) may be the following:

| | |
|---|---|
| - wheat flour | about 7 µm, |
| - olive pit flour | about 6 µm, |
| - almond shell flour | about 6 µm, |
| - soy flour | about 10 µm, |
| - rye flour | about 11 µm, |
| - wood flour | about 7 µm. |

The adhesive composition described in this document may comprise at least one inorganic filler. Preferably, the mean particle size distribution (d50%) of inorganic filler (measured using a Mastersizer 300 (Malvern) equipment) ranges from 1 µm to 10 µm, preferably this value is 2 µm. If particles larger than 10 µm are present, they can settle out.

The inorganic filler comprised in the adhesive composition of the invention may be, for example, magnesium carbonate, calcium carbonate, sodium carbonate, potassium carbonate, barium sulphate, talcum powder, gypsum or a mixture thereof.

The presence of inorganic filler in the adhesive composition of the invention may reduce the amount of flour needed to achieve the desired rheological properties, while reducing the cost of the composition and maintaining a shelf life of at least 2 weeks. In particular embodiments of the invention wherein the adhesive composition described herein comprises a vegetable extract comprising polyflavonoid polymers, the adhesive composition according to the invention may preferably comprise from 10 parts to 25 parts of wheat flour and from 5 parts to 15 parts of an inorganic filler as described herein, all amounts expressed in parts by weight in respect to 100 parts by weight of solid content of the vegetable extract present in the adhesive composition.

"Viscosity reducing agent" in the frame of the present invention is meant to be any substance suitable for reducing the viscosity of the adhesive or hardening composition to the desired value. The adhesive composition of the invention may comprise a viscosity reducing agent preferably selected from glycol, triacetin and a combination thereof.

This viscosity reducing agent may be added to the adhesive composition described in this document in order to reduce the viscosity of the adhesive composition to a desired viscosity value depending on the working conditions of the plywood manufacture. In particular, the viscosity value may be equal to or lower than 10000 cP, wherein the viscosity is measured using a Rheometer DHR-2 (TA Instruments rheometer), with a geometry Peltier-plate, so that the apparent viscosity is measured when the stationary regime is achieved in a flow test at 25°C and shear rate of 100 s-1. Viscosity ranges and values specified in this document are expressed in cP, a well-known viscosity unit commonly used in the technical field of the invention. These viscosity ranges and values can be unambiguously converted to the corresponding ranges and values according to SI Units (Pa s), since that 1 cP is equal to 10⁻³ Pa s. For instance, the adhesive composition of the invention preferably has a viscosity equal to or lower than 10000 cP, i.e., equal to or lower than 10.0 Pa s.

Both glycols and triacetin are plasticizers that, in addition to reduce viscosity, they can increase the tack between resinated veneers, thus reducing the possibility that they separate from each other if cold pre-pressed and, additionally, they are able to reduce the dry rate of the adhesive applied on the veneers allowing a longer open time (i.e., from the application of the adhesive mixture to the veneers to the hot pressed of the glued veneers). Thus, in some embodiments of the present invention wherein the adhesive composition comprises a vegetable extract comprising polyflavonoids, such adhesive composition can comprise from 2 parts to 8 parts by weight of glycol, triacetin or a combination thereof with respect to 100 parts by weight of solid content of the vegetable extract, with the aim to improve the tack of the adhesive mixture obtained after mixing the adhesive composition according to the invention and a hardening agent, in particular one defined as described in this document.

"Glycol" in the frame of the present invention is meant to be any substance that contains two hydroxyl groups. More specifically, the term glycol refers to a dihydric alcohol, also known as diol, in which the two hydroxy groups are on different carbon atoms. Preferably, the glycol present in either the adhesive composition or the hardening composition described herein may be an ethylene glycol or propylene glycol derivative, but it is not limited to said glycols. In particular, the glycol may be a compound of formula HOCH₂CH₂CH₂(OCH₂CH₂CH₂)ₘOH, wherein m is equal to or higher than 0, preferably m ranges from 0 to 2; or preferably the glycol may be a compound of formula HOCH₂CH₂(OCH₂CH₂)ₙOH, wherein n is equal to or higher than 0, preferably n ranges from 0 to 2, and more preferably the glycol is selected from monoethylene glycol and diethylene glycol.

"Triacetin" refers to a triglyceride having the chemical names of 1,2,3-triacetoxypropane or 2,3-diacetyloxypropyl acetate, which corresponds to the CAS number 102-76-1. Triacetin is suitable as a reducing viscosity agent and to enhance the tack of the adhesive system.

The adhesive composition according to the invention may be manufactured maintaining an intense agitation, in particular, using a high shear dispenser with an agitation higher than 300 rpm along all the procedure. This method can comprise sequentially and gradually adding each of the ingredients comprised in the adhesive composition to water or to an aqueous solution comprising the bio-based adhesive, stirring the mixture until homogenization of the ingredient added before starting the addition of the next.

The thickener agent may be added as solid, in particular powder, or as an aqueous solution or dispersion, in particular, a thickener agent water solution with a solid content equal to or lower than 3 wt.%. The thickener agent in solid form is added at the beginning of the procedure to guarantee a correct dissolution in water. However, if a thickener agent aqueous solution is used to manufacture the adhesive composition, ingredients of the composition may be added in any order.

In some embodiments of the invention, the inorganic filler, flour and the viscosity reducing agent may be added in a different order than those above-specified, although such inorganic filler is preferably added before flour because it results in a lower increase of viscosity than flour.

The viscosity of the adhesive composition can be then measured using a Rheometer DHR-2 (TA Instruments), with a geometry Peltier-plate, so that the apparent viscosity is measured when the stationary regime is achieved in a flow test at 25°C and shear rate of 100 s-1. If the viscosity of the adhesive composition is higher than the desired value, water or a viscosity reducing agent as described in this document can be added. The composition may then be stirred until uniformity and the viscosity can be measured again. This procedure can be repeated as many times as required until achieving the required viscosity within the range specified for the adhesive composition of the invention.

A further object of the present invention refers to an adhesive system comprising, isolated one of another:
- Component A: the adhesive composition as defined in this document, and
- Component B: at least one hardener agent, preferably the at least one hardener agent is comprised in a hardening composition further comprising water and, optionally, at least one viscosity reducing agent preferably selected from glycol, triacetin and a combination thereof.

"Hardener agent" or "catalyst" in the frame of the present invention is meant to be any substance suitable to be used to cure bio-based adhesives and, in particular, those bio-based adhesives described in this document. In those particular embodiments of the invention wherein the bio-based adhesives are polyphenolic polymers and, in particular, polyflavonoids, the hardener agent may be selected from hexamine, tris(hydroxymethyl)nitromethane, glyoxal, Lewis acids, 2,5-dihydroxymethylfuran, 2,5-dihydroxymethylfuran moieties, polyethyleneimine (PEl), but is not limited to said catalysts. Preferred Lewis acid may be silica, boric acid or aluminium trichloride. As previously mentioned, the catalyst may be a 2,5-dihydroxymethylfuran moiety, i.e., a compound comprising 2,5-dihydroxymethylfuran as part of a bigger structure such as, for example, 2,5-dihydroxymethylfuran carbohydrate oligomers. Said catalysts are needed to cure adhesive resins, which can be used in the manufacture of all kinds of wood derived boards, including plywood boards.

Preferably, the hardener agent is hexamine, since this compound in combination with the polyflavonoids-based adhesive composition described in this document is able to provide plywood boards complying with the requirements for Class 1 bonding quality (EN-314-2: 1993 (confirmed in 2013) European Standard) and, additionally, it can be considered as a commodity. Consequently, adhesive systems and adhesive mixtures according to the invention comprising hexamine as hardener agent show an optimised balance between effectiveness and cost, which render them particularly suitable for the industrial manufacture of plywood boards.

Other preferred hardener agents which also provide good results in bonding quality are tris(hydroxymethyl)nitromethane, polyethyleneimine (PEI) or combinations thereof, as well as combinations of one or more of these catalysts with hexamine.

Thus, in some particular embodiments of the invention, the hardener agent may be tris(hydroxymethyl)nitromethane, since this compound in combination with the polyflavonoid-based adhesive composition described in this document is able to provide plywood boards complying with the requirements for Class 2 and 3 bonding quality (EN-314-2: 1993 (confirmed in 2013) European Standard). As previously mentioned, this hardener agent may be combined with hexamine to obtain the required bonding quality, while reducing the cost.

Some hardener agents (component B) such as polyethyleneimine, tris(hydroxymethyl)nitromethane or silica, can be directly mixed with the adhesive composition according to the current invention to obtain the adhesive mixture to be applied on the veneers. In some alternative embodiments, component B is a hardening composition comprising at least one hardener agent and water. For example, component B may be commercially available water solutions comprising at least one hardener agent such as a 40 wt.% glyoxal water solution or a 50 wt.% tris(hydroxymethyl)nitromethane water solution.

The hardening composition may comprise glycol as viscosity reducing agent. In such a case, preferably the glycol is a compound of formula HOCH₂CH₂(OCH₂CH₂)ₙOH, wherein n is equal to or higher than 0, preferably n ranges from 0 to 2, and more preferably the glycol is selected from monoethylene glycol and diethylene glycol.

The viscosity reducing agent present in the hardening composition (component B) can be equal or different than the viscosity reducing agent comprised in the adhesive composition (component A).

In some particular embodiments, the adhesive system according to the invention comprises, isolated one of another:
- Component A: the adhesive composition comprising at least one vegetable extract comprising polyflavonoids polymers as defined in this document, and
- Component B: the hardening composition comprising:
   4 to 12 parts by weight of hexamine, where the hexamine is comprised in an aqueous solution with a concentration between 30 wt.% and 42 wt.%, and
   0 to 15 parts by weight of glycol;
all amounts expressed as parts by weight with respect to 100 parts by weight of solid content of the vegetable extract present in the adhesive composition (component A).

The hardening composition (component B) as described in this document can be obtained gradually adding a hardener agent, preferably hexamine, to water at a temperature from 15°C to 30°C, maintaining an agitation higher than 150 rpm by using a high shear dispenser until reaching dissolution.

This invention also refers to an adhesive mixture (also referred to as "formulation" in this document) comprising component A and component B as described in this document. In particular embodiments, the adhesive composition may comprise at least one vegetable extract comprising polyflavonoids as defined in this document, and said adhesive mixture preferably has a total solid content from 43 wt.% to 65 wt.%, and an amount of solid content of vegetable extract from 35 wt.% to 60 wt.%, all amounts expressed by weight in respect to the total weight of the mixture of components A and B.

Further object of the present invention is the use of the adhesive composition, the adhesive system or the adhesive mixture disclosed in this document for manufacturing plywood boards.

The present invention also refers to the plywood boards comprising a plurality of wood veneers adhered by the adhesive mixture of components A and B of the invention interposed between the wood veneers, preferably the plywood boards at least comply with the requirements for at least Class 1 bonding quality (EN 314-2: 1993 (confirmed in 2013) European Standard).

Besides that, the present invention relates to a plywood manufacturing process comprising: applying the adhesive mixture according to the invention to one or more of the wood veneers forming the plywood assembly. In particular, the adhesive mixture may be spread on two sides of one ply of veneer, which is then placed between two plies of veneer that are not coated with resin. The process for manufacturing plywood may correspond to a process typically used in the art with the exception that an adhesive mixture comprising a bio-adhesive resin according to the invention is applied to wood veneers.

During the plywood manufacturing process, components A and B may be first thoroughly mixed in a suitable disperser in the selected proportions to obtain an adhesive mixture, and then such mixture may be applied to the wood veneers by glue spreaders. The adhesive system of the invention enables a broad variety of working conditions, since positive effects of the different additives present in both the adhesive and hardening compositions are optimized.

The present invention also refers to plywood boards obtained or obtainable by the above-mentioned manufacturing process. Preferably, the plywood board obtained or obtainable by this manufacturing process fulfils, at least, the requirements for Class 1 bonding quality (EN 314-2: 1993 (confirmed in 2013) European Standard). In some embodiments of the invention wherein the adhesive composition (component A) comprises mimosa extract, quebracho wood extract, pecan nut extract, pine bark extract or a combination thereof, and the hardening agent is hexamine, the plywood board may fulfil the requirements for Class 1 bonding quality.

Depending on the bio-based adhesive, the hardener agent and, preferably, the plywood manufacturing working conditions, plywood boards complying with the requirements for Class 2 or 3 bonding quality (EN 314-2: 1993 (confirmed in 2013) European Standard) can also be obtained or obtainable by the manufacturing process according to the present invention. In particular, adhesive compositions (component A) comprising pecan nut pith extract or pine bark extract, and hexamine as hardener agent (in component B) may provide plywood boards complying with the requirements for Class 2 or 3 bonding quality.

Besides that, plywood boards fulfilling the requirements for Class 2 or 3 bonding quality may also be obtained or obtainable by the manufacturing process comprising applying an adhesive mixture, wherein the hardener agent (component B) is polyethyleneimine (PEI) or, preferably, tris(hydroxymethyl)nitromethane, and the adhesive composition (component A) according to the invention comprises any type of polyflavonoid-based vegetable extract, in particular mimosa bark extract, quebracho wood extract, pine bark extract, pecan nut pith extract or a combination thereof.

### EXAMPLES

In the following, the invention will be further illustrated by means of Examples.

### EXAMPLE 1 PILOT SCALE PLYWOOD PREPARATION USING DIFFERENT ADHESIVE COMPOSITIONS FROM SEVERAL VEGETABLE EXTRACTS

5 veneer poplar plywood were prepared in a pilot scale plant using the polyflavonoid-based adhesive compositions (component A) and hardening compositions (component B) of Table 1.

**Table 1. Pilot scale polyflavonoids-based formulations for plywood**

| | **FORMULATION** | **1¹** | **21** | **31** | **41** |
|---|---|---|---|---|---|
| | | **Parts by weight** | **Parts by weight** | **Parts by weight** | **Parts by weight** |
| **Component A** | MIMOSA EXTRACT² | 225.0 | | 125.0 | |
| | QUEBRACHO EXTRACT² | | 225.0 | 125.0 | |
| | PECAN NUT EXTRACT² | | 50.0 | | |
| | PINE EXTRACT² | 50.0 | | 50.0 | 300.0 |
| | WATER FOR BIOADHESIVE | 275.0 | 270.0 | 275.0 | 400.0 |
| | ALMOND SHELL FLOUR | | 70.0 | 60.0 | 25.0 |
| | WHEAT FLOUR | 60.0 | | | |
| | MAGNESIUM CARBONATE | 15.0 | | 15.0 | |
| | SODIUM CARBONATE | | 20.0 | | |
| | CALCIUM CARBONATE | | | | 10.0 |
| | CELLULOSE NANOFIBRILS | 0.5 | | 0.5 | |
| | XANTHAN GUM 1% | | 9.0 | | 5.0 |
| **Component B** | HEXAMINE | 17.9 | 17.9 | 19.5 | 19.5 |
| | WATER FOR HARDENER | 26.8 | 26.8 | 29.3 | 29.3 |

| | | | | | |
|---|---|---|---|---|---|
| **¹** Amounts to prepare four 5-veneer poplar plywood; ²Amounts included in the table correspond to the solid contents of the vegetable extract | | | | | |

Mimosa bark extract used was a solid powder with a moisture of 6 wt.%, a Stiasny number from 70 % to 90 %, a pH (50% w/w water solution at 25°C) from 5 to 8, a viscosity (50% w/w solution at 25°C and shear rate 100 s-1) from 200 to 1000 cP, and reactivity/gel time (50% w/w water solution with 6.5% w/w hexamine powder at 100°C) from 110 to 130 sec.

Pine bark extract used was a solid powder with a moisture of 9 wt.%, a Stiasny number from 75 % to 95 %, a pH (36% w/w water solution at 25°C) from 5 to 8, a viscosity (36% w/w water solution at 25°C and shear rate 100 s-1) from 250 cP to 1000 cP, reactivity/gel time (36% w/w water solution with 6.5% w/w hexamine powder at 100°C) from 60 to 100 s, reactivity/gel time (36% w/w water solution with 12% w/w tris(hydroxymethyl)nitromethane powder) from 50 to 70 s.

Quebracho wood extract used was a solid powder with a moisture of 8 wt.%, a Stiasny number from 70 % to 90 %, a pH (50% w/w water solution at 25°C) from 5 to 8, a viscosity (50% w/w solution at 25°C and shear rate 100 s-1) from 300 to 1100 cP, and reactivity/gel time (50% w/w water solution with 6.5% w/w hexamine powder at 100°C) from 120 to 140 sec.

Pecan nut extract used was a solid powder with a moisture of 7 wt.%, a Stiasny number from 75 % to 95 %, a pH (40% w/w water solution at 25°C) from 5 to 8, a viscosity (40% w/w solution at 25°C and shear rate 100 s-1) from 500 to 1500 cP, and reactivity/gel time (40% w/w water solution with 6.5% w/w hexamine powder at 100°C) from 35 to 55 sec.

Almond shell flour used had a harmonic mean particle size of about 6 µm, whereas wheat flour used had a harmonic mean particle size of about 7 µm, both measured using a Laser Particle Sizer Analysette 22 Microtec.

The mean particle size distribution (d50%) of inorganic filler used in this Examples ranged from 1 µm to 10 µm, measured using a Mastersizer 300 (Malvern) equipment.

As an example, the preparation of the adhesive mixture corresponding to formulation 1 is described below.

### Component A

Using a high shear disperser, and maintaining an agitation speed of 500 rpm during the process at a temperature from 20°C to 25°C, 15 g magnesium carbonate was added to 275 g of water. Then, 225 g of mimosa extract and 50 g of pine extract was added and the mixture was stirred 10 min to obtain a solution free of lumps. After that, 60 g of wheat flour were gradually added. Finally, 0.5 g of cellulose nanofibrils was added and the mixture was stirred for 10-15 min, obtaining the adhesive composition according to the invention ready to be stored until use.

### Component B (40 wt.% hexamine solution)

For the preparation of this solution, a disperser with high shear was used in order to maintain an agitation speed of 500 rpm throughout the process at a temperature from 20°C to 25°C. In these conditions, 17.9 g of hexamine were gradually added to 26.8 g of water and the mixture was stirred until the hardening composition was obtained.

All compositions prepared (components A and B) were duly identified, packed and stored for 2 weeks at a temperature from 15°C to 25°C before being use in the manufacturing of plywood boards. After that time, no sedimentation was visually observed in the adhesive composition prepared.

At the time of manufacturing the plywood boards, components A and B were mixed using a high shear dispenser, intensively stirring (300rpm) for 5-10 min. The viscosity of formulation 1 was 4700 cP, and the viscosity of formulation 2 was 5100 cp, and the viscosity of formulation 3 was 4300 cp, and the viscosity of formulation 4 was 6500 cp all measured in a Peltier-plate Rheometer, at 25°C and shear rate 100 s⁻¹.

The plywood pilot scale preparation conditions are described in Table 2 and the results obtained in Table 3.

**Table 2. Pilot scale plywood preparation conditions**

| **Boards** | **1/2** | **3/4** | **5/6** | **7/8** |
|---|---|---|---|---|
| **Number of veneers** | 5 | 5 | 5 | 5 |
| **Thickness of surface veneers (mm)** | 1.5 | 1.5 | 1.5 | 1.5 |
| **Thickness of core veneers (mm)** | 2.5 | 2.5 | 2.5 | 2.5 |
| **Veneer moisture content (% dry basis)** | 12 | 12 | 12 | 12 |
| **Veneer surface (m²)** | 0.0625 | 0.0625 | 0.0625 | 0.0625 |
| **Adhesive spread rate per single glue line (g/m²)** | 200 | 200 | 200 | 200 |
| **Adhesive system formulation¹** | 1 | 2 | 3 | 4 |
| **Press temperature (°C)** | 120 | 120 | 120 | 120 |
| **Pressure during cold pre-pressing (kg/cm²)** | 5 | 5 | 5 | 5 |
| **Pre-pressing time (min)** | 5 | 5 | 5 | 5 |
| **Waiting time before hot pressing (min)** | 20 | 20 | 20 | 20 |
| **Pressure during hot-pressing (kg/cm²)** | 5 | 5 | 5 | 5 |
| Hot-pressing time (min) | 8 | 8 | 8 | 4 |
| Final board thickness (mm) | 9.1 | 9.3 | 8.8 | 9.2 |
| Press factor (min/mm) | 0.88 | 0.86 | 0.91 | 0.43 |

| | | | | |
|---|---|---|---|---|
| ¹ Two Plywood were prepared per each condition test | | | | |

The preparation of the specimens and the pre-treatment required to obtain a Class 1 gluing quality is described in EN 314-1: 2004, European Standard. Basically, it consists of immersing the specimens 24h in water at 20 ± 3 °C.

Pre-treated specimens must fulfil the requirements of shear stress and wood failure detailed in EN 314-2, and included in the following table:

| **Mean Shear Strength fv (N/mm²)** | **Mean Wood Failure w %** |
|---|---|
| 0.2 ≤ fv ≤ 0.4 | ≥ 80 |
| 0.4 ≤ fv < 0.6 | ≥ 60 |
| 0.6 ≤ fv ≤ 1.0 | ≥ 40 |
| 1.0 ≤ fv | no specification |

All the boards manufactured using the adhesive mixture of the invention (i.e., formulations 1, 2, 3 and 4 of table 1) comply with the requirements of shear stress and wood failure detailed in EN 314-2, as evidenced by results reported in the following table.

**Table 3. Pilot scale plywood results**

| **Boards** | **1 / 2** | **3 / 4** | **5 / 6** | **7 / 8** |
|---|---|---|---|---|
| **Shear Strength fv ¹ (N/mm²)** | 1.37 ± 0.19 | 1.31 ± 0.15 | 1.25 ± 0.17 | 1.16 ± 0.10 |
| **Wood Failure w (%) ¹** | 30 ± 10 | 40 ± 10 | 30 ± 10 | 40 ± 10 |

| | | | | |
|---|---|---|---|---|
| ¹ Shear strength and wood failure according to EN 314-2. The results show the mean and standard deviation of 10 individual samples per each plywood | | | | |

### EXAMPLE 2: Stability of adhesive compositions

Some compositions comprising at least one vegetable extract comprising polyflavonoids, flour, a thickener agent (in particular, cellulose nanofibrils or xanthan gum) and, optionally, an inorganic filler were stored at a temperature from 15°C to 25°C until sedimentation was visually observed (formulations 1-4). Besides that, some comparative formulations (formulations 5-7) were prepared comprising at least one vegetable extract comprising polyflavonoids, either flour or a thickener agent and, optionally, an inorganic filler. These comparative formulations were also stored at a temperature from 15°C to 25°C until sedimentation was visually observed.

**Table 4 Polyflavonoids-based formulations for plywood and its shelf life**

| **FORMULATION** | **1** | **2** | **3** | **4** | **5** | **6** | **7** |
|---|---|---|---|---|---|---|---|
| | **Parts by weight** | **Parts by weight** | **Parts by weight** | **Parts by weight** | **Parts by weight** | **Parts by weight** | **Parts by weight** |
| MIMOSA EXTRACT² | 225.0 | | 125.0 | | 225.0 | 225.0 | |
| QUEBRACHO EXTRACT² | | 225.0 | 125.0 | | | | |
| PECAN NUT EXTRACT² | | 50.0 | | | | | |
| PINE EXTRACT² | 50.0 | | 50.0 | 300.0 | 50.0 | 50.0 | 300.0 |
| WATER FOR BIOADHESIVE | 275.0 | 270.0 | 275.0 | 400.0 | 275.0 | 275.0 | 400.0 |
| ALMOND SHELL FLOUR | | 70.0 | 60.0 | 25.0 | | | 25.0 |
| WHEAT FLOUR | 60.0 | | | | 60.0 | | |
| MAGNESIUM CARBONATE | 15.0 | | 15.0 | | 15.0 | 15.0 | |
| SODIUM CARBONATE | | 20.0 | | | | | |
| CALCIUM CARBONATE | | | | 10.0 | | | 10.0 |
| CELLULOSE NANOFIBRILS | 0.5 | | 0.5 | | | 0.5 | |
| XANTHAN GUM 1% | | 9.0 | | 5.0 | | | |
| Shelf life, days¹ | 18 | 20 | 17 | 20 | 7 | 5 | 6 |

| | | | | | | | |
|---|---|---|---|---|---|---|---|
| ¹Shelf life is established as previously described in this document | | | | | | | |

Polyflavonoid-based formulations comprising the combination of flour and a thickener agent (i.e., formulations 1-4) show a significant higher shelf life than other polyflavonoid-based formulations comprising either flour or a thickening agent, but not both. More specifically, the shelf life of the formulation according to the invention may be three time higher than those formulations comprising either flour or a thickening agent, but not the combination of flour and a thickening agent.

## Claims

1. An adhesive composition for plywood manufacturing **characterized in that** it comprises:
- 100 parts by weight of solid content of at least one vegetable extract comprising polyflavonoids;
- 5 to 40 parts by weight of flour;
- 0 to 20 parts by weight of at least one inorganic filler;
- 0.02 to 0.2 parts by weight of at least one thickener agent;
- 0 to 15 parts by weight of at least one viscosity reducing agent preferably selected from glycol, triacetin and a combination thereof; and
- 67 to 155 parts by weight of water;
wherein the Stiasny number of the vegetable extract comprising polyflavonoids is higher than 65%.

2. The adhesive composition of claim 1, wherein the vegetable extract is selected from mimosa bark extract, quebracho wood extract, hemlock bark extract, sumach bark extract, pine bark extract, pecan nut pith extract, Douglas fir bark extract and a combination thereof, preferably the vegetable extract is selected from pecan nut pith extract, mimosa bark extract, quebracho wood extract, pine bark extract and a combination thereof.

3. The adhesive composition of any one of claims 1 or 2, wherein the Stiasny number of the vegetable extract comprising polyflavonoids is equal to or higher than 75%.

4. The adhesive composition of any one of claims 1 to 3, wherein the thickener agent is selected from cellulose nanofibrils, carboxymethyl cellulose, hydroxyethyl cellulose, xanthan gum, sepiolite and a combination thereof.

5. The adhesive composition of any one of claims 1 to 4, wherein the flour has a harmonic mean particle size value lower than 150 µm, preferably lower than 50 µm, more preferably lower than 20 µm, using a Laser Particle Sizer Analysette 22 Microtec.

6. The adhesive composition of any one of claims 1 to 5, wherein the flour is selected from wheat flour, olive pit flour, almond shell flour, corn flour, coconut husk flour, soy flour, rye flour, hemp flour, pumpkin flour, rice flour, coconut flour, wood flour and any combination thereof.

7. The adhesive composition of any one of claims 1 to 6 comprising at least one inorganic filler, wherein the mean particle size distribution of the inorganic filler ranges from 1 µm to 10 µm, measured using a Mastersizer 300 (Malvern) equipment.

8. An adhesive system **characterized in that** it comprises, isolated one of another:
- Component A: the adhesive composition as defined in any one of claims 1 to 7, and
- Component B: at least one hardener agent, preferably the at least one hardener agent is comprised in a hardening composition further comprising water and, optionally, at least one viscosity reducing agent preferably selected from glycol, triacetin and a combination thereof.

9. The adhesive system of claim 8, wherein component A is the adhesive composition as defined in any one of claims 1 to 7, and the hardener agent is selected from hexamine, tris(hydroxymethyl)nitromethane, glyoxal, Lewis acids, 2,5-dihydroxymethylfuran, 2,5-dihydroxymethylfuran moieties, polyethyleneimine (PEI) and any combination thereof, preferably hexamine.

10. An adhesive mixture comprising component A and component B as defined in any one of claims 8 to 9.

11. The adhesive mixture of claim 10, wherein component A is the adhesive composition as defined in any one of claims 1 to 7, and the adhesive mixture has a total solid content from 43wt% to 65wt% and an amount of solid content of vegetable extracts from 35wt.% to 60wt.%, all amounts expressed by weight in respect to the total weight of the mixture of components A and B.

12. Use of the adhesive composition as defined in any one of claims 1 to 7, the adhesive system as defined in any one of claims 8 to 9, or the adhesive mixture as defined in any one of claims 10 to 11 for manufacturing plywood boards.

13. Plywood boards comprising a plurality of wood veneers adhered by an adhesive mixture as defined in any one of claims 10 to 11 interposed between the wood veneers, wherein the plywood boards fulfil at least the requirements for Class 1 bonding quality (EN 314-2: 1993 (confirmed in 2013) European Standard).

## Patentansprüche

1. Klebstoffzusammensetzung für die Herstellung von Sperrholz, **dadurch gekennzeichnet, dass** sie umfasst:
- 100 Gewichtsteile Feststoffgehalt mindestens eines pflanzlichen Extrakts, der Polyflavonoide enthält;
- 5 bis 40 Gewichtsteile Mehl;
- 0 bis 20 Gewichtsteile mindestens eines anorganischen Füllstoffs;
- 0,02 bis 0,2 Gewichtsteile mindestens eines Verdickungsmittels;
- 0 bis 15 Gewichtsteile mindestens eines viskositätssenkenden Mittels, vorzugsweise ausgewählt aus Glykol, Triacetin und einer Kombination davon; und
- 67 bis 155 Gewichtsteile Wasser;
wobei die Stiasny-Zahl des Polyflavonoide enthaltenden Pflanzenextrakts mehr als 65 % beträgt.

2. Klebstoffzusammensetzung gemäß Anspruch 1, wobei der Pflanzenextrakt ausgewählt ist aus Mimosenrindenextrakt, Quebrachoholzextrakt, Hemlockrindenextrakt, Sumachrindenextrakt, Kiefernrindenextrakt, Pekannusskernextrakt, Douglasienrindenextrakt und einer Kombination davon, wobei der Pflanzenextrakt vorzugsweise ausgewählt ist aus Pekannusskernextrakt, Mimosenrindenextrakt, Quebrachoholzextrakt, Kiefernrindenextrakt und einer Kombination davon.

3. Klebstoffzusammensetzung gemäß einem der Ansprüche 1 oder 2, wobei die Stiasny-Zahl des Polyflavonoide enthaltenden Pflanzenextrakts gleich oder höher als 75 % ist.

4. Klebstoffzusammensetzung gemäß einem der Ansprüche 1 bis 3, wobei das Verdickungsmittel ausgewählt ist aus Cellulosenanofibrillen, Carboxymethylcellulose, Hydroxyethylcellulose, Xanthangummi, Sepiolith und einer Kombination davon.

5. Klebstoffzusammensetzung gemäß einem der Ansprüche 1 bis 4, wobei das Mehl einen harmonischen Mittelwert der Teilchengröße von weniger als 150 µm, vorzugsweise weniger als 50 µm, besonders bevorzugt weniger als 20 µm aufweist, unter Verwendung eines Laser Particle Sizer Analysette 22 Microtec.

6. Die Klebstoffzusammensetzung gemäß einem der Ansprüche 1 bis 5, wobei das Mehl ausgewählt ist aus Weizenmehl, Olivenkernmehl, Mandelschalenmehl, Maismehl, Kokosnussschalenmehl, Sojamehl, Roggenmehl, Hanfmehl, Kürbismehl, Reismehl, Kokosnussmehl, Holzmehl und einer beliebigen Kombination davon.

7. Klebstoffzusammensetzung gemäß einem der Ansprüche 1 bis 6, umfassend mindestens einen anorganischen Füllstoff, wobei die mittlere Teilchengrößenverteilung des anorganischen Füllstoffs im Bereich von 1 µm bis 10 µm liegt, gemessen mit einer Mastersizer 300 (Malvern)-Ausrüstung.

8. Ein Klebstoffsystem, **dadurch gekennzeichnet, dass** es isoliert voneinander umfasst:
- Komponente A: die in einem der Ansprüche 1 bis 7 definierte Klebstoffzusammensetzung und
- Komponente B: mindestens ein Härtungsmittel, vorzugsweise ist das mindestens eine Härtungsmittel in einer Härtungszusammensetzung enthalten, die weiterhin Wasser und gegebenenfalls mindestens ein viskositätssenkendes Mittel, vorzugsweise ausgewählt aus Glykol, Triacetin und einer Kombination davon, enthält.

9. Klebstoffsystem gemäß Anspruch 8, wobei Komponente A die in einem der Ansprüche 1 bis 7 definierte Klebstoffzusammensetzung ist und das Härtemittel ausgewählt ist aus Hexamin, Tris(hydroxymethyl)nitromethan, Glyoxal, LewisSäuren, 2,5-Dihydroxymethylfuran, 2,5-Dihydroxymethylfuran-Anteilen, Polyethylenimin (PEI) und einer beliebigen Kombination davon, vorzugsweise Hexamin.

10. Klebstoffmischung, umfassend die Komponente A und die Komponente B nach einem der Ansprüche 8 bis 9.

11. Klebstoffmischung gemäß Anspruch 10, wobei Komponente A die Klebstoffzusammensetzung ist, wie sie in einem der Ansprüche 1 bis 7 definiert ist, und die Klebstoffmischung einen Gesamtfeststoffgehalt von 43 Gew.-% bis 65 Gew.-% und eine Menge an Feststoffgehalt an Pflanzenextrakten von 35 Gew.-% bis 60 Gew.-% aufweist, wobei alle Mengen als Gewicht in Bezug auf das Gesamtgewicht der Mischung der Komponenten A und B ausgedrückt sind.

12. Verwendung der Klebstoffzusammensetzung nach einem der Ansprüche 1 bis 7, des Klebstoffsystems nach einem der Ansprüche 8 bis 9 oder der Klebstoffmischung nach einem der Ansprüche 10 bis 11 zur Herstellung von Sperrholzplatten.

13. Sperrholzplatten, die eine Vielzahl von Holzfurnieren umfassen, die mit einer Klebstoffmischung nach einem der Ansprüche 10 bis 11 verklebt sind, die zwischen den Holzfurnieren angeordnet ist, wobei die Sperrholzplatten mindestens die Anforderungen an die Verleimungsqualität der Klasse 1 erfüllen (Europäische Norm EN 314-2: 1993 (bestätigt 2013)).

## Revendications

1. Composition adhésive pour la fabrication de contreplaqué, **caractérisée en ce qu'**elle comprend :
- 100 parties, en poids de la teneur en solides, d'au moins un extrait végétal comprenant des polyflavonoïdes ;
- 5 à 40 parties en poids de farine ;
- 0 à 20 parties en poids d'au moins une charge inorganique ;
- 0,02 à 0,2 partie en poids d'au moins un agent épaississant ;
- 0 à 15 parties en poids d'au moins un agent réducteur de viscosité de préférence choisi parmi le glycol, la triacétine et leurs combinaisons ; et
- 67 à 155 parties en poids d'eau ;
dans laquelle le nombre de Stiasny de l'extrait végétal comprenant des polyflavonoïdes est supérieur à 65 %.

2. Composition adhésive selon la revendication 1, dans laquelle l'extrait végétal est choisi parmi un extrait d'écorce de mimosa, un extrait de bois de québracho, un extrait d'écorce de tsuga, un extrait d'écorce de sumac, un extrait d'écorce de pin, un extrait de moelle de pacanier, un extrait d'écorce de sapin de Douglas et leurs combinaisons, de préférence l'extrait végétal est choisi parmi un extrait de moelle de pacanier, un extrait d'écorce de mimosa, un extrait de bois de québracho, un extrait d'écorce de pin et leurs combinaisons.

3. Composition adhésive selon l'une quelconque des revendications 1 et 2, dans laquelle le nombre de Stiasny de l'extrait végétal comprenant des polyflavonoïdes est égal ou supérieur à 75 %.

4. Composition adhésive selon l'une quelconque des revendications 1 à 3, dans lequel l'agent épaississant est choisi parmi les nanofibrilles de cellulose, la carboxyméthylcellulose, l'hydroxyéthylcellulose, la gomme xanthane, la sépiolite et leurs combinaisons.

5. Composition adhésive selon l'une quelconque des revendications 1 à 4, dans laquelle la farine a une valeur de granulométrie moyenne harmonique inférieure à 150 µm, de préférence inférieure à 50 µm, mieux encore inférieure à 20 µm, par utilisation d'un analyseur de particules à laser Analysette 22 Microtec.

6. Composition adhésive selon l'une quelconque des revendications 1 à 5, dans laquelle la farine est choisie parmi une farine de blé, une farine de noyaux d'olive, une farine de coquilles d'amande, une farine de maïs, une farine de cosses de noix de coco, une farine de soja, une farine de seigle, une farine de chanvre, une farine de potiron, une farine de riz, une farine de noix de coco, une farine de bois et l'une quelconque de leurs combinaisons.

7. Composition adhésive selon l'une quelconque des revendications 1 à 6, comprenant au moins une charge inorganique, dans laquelle la distribution de granulométrie moyenne de la charge inorganique est située dans la plage allant de 1 µm à 10 µm, mesurée par utilisation d'un équipement Mastersizer 300 (Malvern).

8. Système adhésif, **caractérisé en ce qu'**il comprend, isolés l'un de l'autre :
- un composant A : la composition adhésive telle que définie dans l'une quelconque des revendications 1 à 7, et
- un composant B : au moins un agent durcisseur, de préférence l'au moins un agent durcisseur étant compris dans une composition de durcissement comprenant en outre de l'eau et éventuellement au moins un agent réducteur de viscosité de préférence choisi parmi le glycol, la triacétine et une combinaison de ceux-ci.

9. Système adhésif selon la revendication 8, dans lequel le composant A est la composition adhésive telle que définie dans l'une quelconque des revendications 1 à 7, et l'agent durcisseur est choisi parmi l'hexamine, le tris(hydroxyméthyl)nitrométhane, le glyoxal, les acides de Lewis, le 2,5-dihydroxyméthylfurane, les fragments 2,5-dihydroxyméthylfurane, la polyéthylène-imine (PEI) et l'une quelconque de leurs combinaisons, de préférence l'hexamine.

10. Mélange adhésif comprenant le composant A et le composant B tels que définis dans l'une quelconque des revendications 8 et 9.

11. Mélange adhésif selon la revendication 10, dans lequel le composant A est la composition adhésive telle que définie dans l'une quelconque des revendications 1 à 7, et lequel mélange adhésif a une teneur totale en solides de 43 % en poids à 65 % en poids et une quantité de teneur en solides d'extraits végétaux de 35 % en poids à 60 % en poids, toutes les quantités étant exprimées en poids par rapport au poids total du mélange des composants A et B.

12. Utilisation de la composition adhésive telle que définie dans l'une quelconque des revendications 1 à 7, du système adhésif tel que défini dans l'une quelconque des revendications 8 et 9, ou du mélange adhésif tel que défini dans l'une quelconque des revendications 10 et 11, pour la fabrication de panneaux de contreplaqué.

13. Panneaux de contreplaqué comprenant une pluralité de feuilles minces de bois qui adhèrent au moyen d'un mélange adhésif tel que défini dans l'une quelconque des revendications 10 et 11 interposé entre les feuilles minces de bois, lesquels panneaux de contreplaqué satisfont au moins les exigences pour la qualité de collage de Classe 1 (norme européenne EN 314-2 : 1993 (confirmée en 2013)).
